# EUROPEAN PATENT APPLICATION

(11) **EP 1 622 322 A1**
(43) Date of publication of application: **01.02.2006**
(21) Application number: 04728580.4
(22) Date of filing: 21.04.2004
(51) Int. Cl.: H04L 12/56, H04L 29/06

(54) **METHOD FOR THE PRIORITY CLASSIFICATION OF FRAMES**

(30) Priority: 06.05.2003 ES 200301021
(71) Applicant: Diseno de Sistemas en Silicio S.A., 46980 Paterna (Valencia) (ES)
(72) Inventor: BLASCO CLARET, Jorge Vicente, E-46020 Valencia (ES); RIVEIRO INSUA, Juan Carlos, E-46019 Valencia (ES); GOMEZ MARTINEZ, Feliciano, E-46001 Valencia (ES); TEN CEBRIAN, Andrea, E-46021 Valencia (ES)
(74) Representative: Ungria Lopez, Javier
(86) International application number: PCT/ES2004/000172
(87) International publication number: WO 2004/100464

(57) **Abstract**

It permits individual frames (OSI level 2 packets) to be classified into different priorities according to their content. It is based on the application of a set of rules and subrules for analysing the content of each frame and assigning a priority to the frame as a function of that analysis; and so with low cost it permits the construction of systems providing quality of service or classes of service as a function of any element of the packet: according to origin, destination, level three data stream, higher level applications, any kind of classification of higher level priorities (such as ToS of IP) and, above all, as a function of any standard or proprietary priorities protocol. Furthermore, it permits the design of different hierarchies of priorities in order to be able to assign one set of priorities or another according to situations (for example, one hierarchy for TCP packets and another different one for UDP packets).

## Description

### METHOD FOR THE PRIORITY CLASSIFICATION OF FRAMES OBJECT OF THE INVENTION

As stated in the title of this specification, the present invention refers to a classification procedure of frames by priorities.

The procedure of the invention is applicable to communications systems independently of the physical medium employed for the communication.

The main characteristic of the procedure is that it permits representation of a generic communication system capable of determining the priority of a packet according to its content without specifying the content, position, nor what its length is. This characteristic permits a great deal of flexibility because it can be prioritized by protocol, by size, by any field of any header and even by a proprietary data content or any proprietary protocol. The number of priority levels can be as large as is wished. Furthermore, it is a simple system requiring few resources.

### BACKGROUND OF THE INVENTION

Nowadays, many applications for telecommunication systems require certain guarantees from the physical medium in terms of, for example, maximum latencies, maximum packet losses, etc. The majority of communication systems are based on packet switching systems which have so far not been provided with mechanisms permitting the quality of a particular service to be guaranteed in line with parameters such as the above. More and more mechanisms are appearing permitting data streams to be prioritized at different levels or reserves of resources to be made.

There does not exist any standard generic system for classifying data packets in different priorities so that systems can later on be implemented that will apply those priorities in arbitrating access to the physical medium. Many manufacturers use systems of rules for assigning priorities but they are fixed systems on known protocols and are therefore not flexible. For example, CISCO applies priorities as a function of the protocol (whether it is ip, arp, etc.), as a function of the port (in the case of known protocol), as a function of the input interface, as a function of the size of the queue or as a function of a combination of the above. In other words, they are fixed and known rules which scarcely take account of the content of the packet (only for looking at parameters such as protocol and without any possibility of looking at other fields). Furthermore, the number of priorities is limited. For example, in the case of CISCO it is four (high, medium, low, null).

Other patented systems check the type of stream in terms of its latency, packet size and other methods, and they assign an identifier by stream (for example, 3-COM in its US6363429, Method and system for automatic determination of priority data streams on computer networks).

The advantage of the procedure of the invention is that it permits the creation of a generic system capable of determining the priority of a packet according to its content without specifying the content, position nor what its length is. This permits a great deal of flexibility because it can be prioritized by protocol, by size, by any field of any header and even by a proprietary data content or any proprietary protocol. The number of priority levels can be as large as is wished. Furthermore, it is a simple system requiring few resources.

### DESCRIPTION OF THE INVENTION

In order to achieve the objectives and avoid the drawbacks stated above, the invention consists of a classification procedure of frames by priorities for the support of any communication system carrying out the sending with distinction of service classes, where the frame consists of a level 2 packet of the OSI architecture, including headers and tails. This procedure is characterized by the application of multiple rules, where each rule is associated with multiple subrules of priorities independent among each rule, in order to analyse the content of each frame and assign a priority to the frame as a function of that analysis.

These rules, and the subrules of priorities associated with them, are applied according to a certain previously established order. The application of a rule consists of searching for a particular known pattern of bits in the frame in a certain position marked by a displacement on that frame. This comparison may or may not be satisfied. If the rule is satisfied, the subrules of priorities associated with that particular rule are applied. If the evaluation of the rule is negative, the following rule in the pre-established order is evaluated.

The application of the subrules of priorities consists, for each subrule, of comparing a set of bits in a defined position of the frame with a priority pattern. If the comparison is satisfied, the priority associated with the priority pattern used in the comparison is assigned to the frame. If the comparison is not satisfied with any of the priority patterns of the subrules of priorities, then the frame is selectively assigned a default priority or the following rule in the pre-established order is checked.

In the event of none of the rules of the system being satisfied, a default priority is assigned.

The main advantage of using this procedure in combination with queues ordered by priorities is the effective management of the internal memory resources and the differentiation of traffic by priorities. Furthermore, it is a very simple procedure based on comparisons, displacements and masks requiring few physical resources. It is also a flexible procedure permitting multiple configurations: prioritization by traffic types, prioritization by frame types, by protocols, by origin MAC (Medium Access Control), by destination port, etc.,. depending on the rules and subrules. A further advantage is that it permits the creation of systems of high level proprietary priorities since the prioritization can be based on the content of the packet at any point thereof (also the data) .

Below, in order to facilitate a better understanding of this specification and forming an integral part thereof, some figures are included in which the object of the invention has been represented in a manner that is illustrative rather than limiting.

### BRIEF DESCRIPTION OF THE DRAWINGS

Figure 1.- Diagrammatically represents the application process of rules and subrules for an example with two rules and eight subrules per rule.
Figure 2.- Represents an example of using a system carrying out the procedure of the invention.

### DESCRIPTION OF AN EMBODIMENT OF THE INVENTION

Given below is a description of an example of the invention, making reference to the numbering adopted in the figures.

In this scheme of embodiment, the procedure is applied on a communication systems using the electrical network as transmission medium.

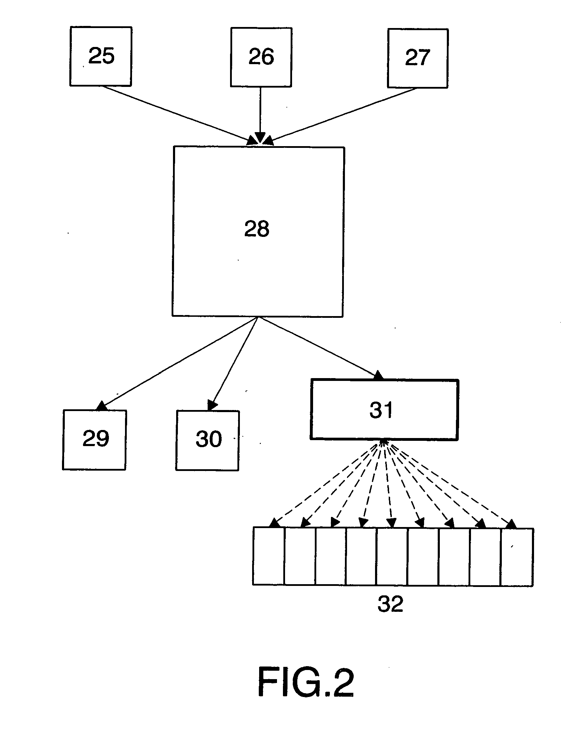

Figure 2 is a diagram of a possible OSI level 2 system for data transmission on the electrical line. in this figure, the reference (25) represents the external inputs to the block (28) of level 2 (coming, for example, from a segment of local area network or from a destination equipment), (26) represents the internal input (of the processor) of the system, (27) is the input from the electrical network. The block (28) performs the processes proper to level 2 such as routing. These processes locate the packets in the external outputs non-ordered by priorities (29), in the output to the processor (30) of the system or in the outputs to the electrical network (32), in which case they are ordered in queues by priorities. Placed in front of these queues ordered by priorities (32) is the classifying element (31) which makes use of the procedure of the invention. Another block uses the priorities obtained by the classifier for ordering the packets by priorities in the output queues.

In other words, once it has been stored in the internal memory, each packet processed by the system is processed by the routing module in the strict sense (28) in order to decide on the output port corresponding to it. If the destination is an output towards the electrical line, then before placing the packet in the appropriate queue, it is processed in the classifier (31).

Once the classifier has obtained the corresponding priority, it sends the packet to its destination queue. Another block has to process the priority of the packet suitably and, always provided the queue is configured for having priorities, decide on which position of the queue with priorities each new packet is going to be introduced in such a way that the top priority packets are the first to leave the queue. In a situation of congestion, when it is decided that a packet has to be discarded due to lack of internal resources, in a queue with priority it will always be the one with least priority that will be discarded. If a new packet has higher priority than a packet already in the queue, then the packet with least priority will be taken out of the queue in order to create space for the new higher priority packet.

The classifier decides the priority of the packet according to certain rules. In the example of embodiment, two different rules are used in order to simplify the description (though there can exist an unlimited number of them). First of all, it is decided which rule is applied to the packet in particular and then the priority is calculated according to that rule.

The decision on which rule applies is taken by means of a pattern, a displacement and a mask. In other words, a certain pattern is sought in a certain position of the packet. If the coincidence occurs for any of the rules, that is the rule to apply, and if not then the packet is assigned a default priority.

Once we know which rules we apply, we then search for the priority. In order to determine the priority, we have a new displacement and a new bit mask, but now, according to the example, there are eight different patterns. The pattern which fits defines a position in the priority assignment vector. In other words, each pattern is associated with a priority (but not in a fixed way, two patterns can have the same priority associated with them). If any priority pattern coincides, the associated priority is assigned to the packet, and if no pattern coincides then the default priority is assigned to it.

In this example, the use of the rules is not accumulative, and if the first rule is applicable but no pattern coincides then it is not sought in the second rule; instead, the default priority is applied directly. But another option is that, if no subrule of a rule applies, then it is sought in the following rule and so on successively.

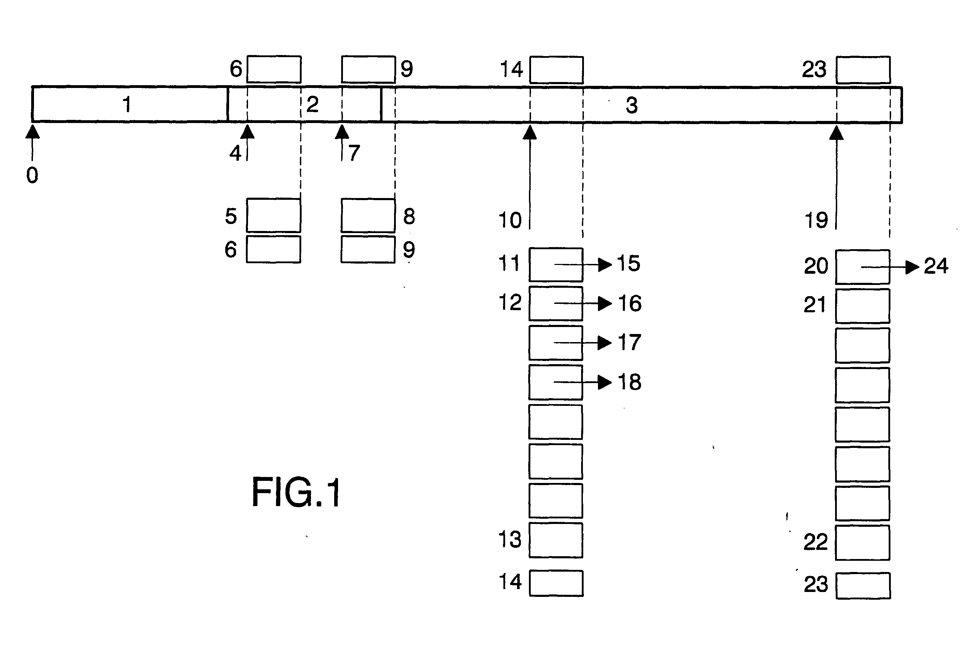

The described procedure is represented in figure 1. Here, the reference (0) marks the origin for all displacements. (1), (2) and (3) are the parts of the packet:: (1) is the header of the packet that is transmitted by the electrical line, (2) is the header of level 2 and (3) is the data of the packet. The arrow (4) indicates the displacement for the first rule, (5) is the pattern which has to be sought in that displacement in order to satisfy that rule and (6) is the bit mask that is applied both the packet and to the pattern in the comparison.

If this rule is not satisfied, then the following one is passed on to, and it will have another displacement (7), another pattern (8), and another mask (9).

If the first rule is satisfied, then it is sought in the displacement of the subrules of that rule, indicated by (10), and, applying the mask of the subrule (14), the patterns of the subrule (11), (12) up to (13) are compared. If the pattern (11) coincides, the packet has the priority indicated by (15), if it is (12) which coincides, then the priority is (16), and so on successively (17), (18), ...

If it is the second rule which is satisfied, then the displacement marked by (19) and the mask indicated in (23) have to be applied and compared with the patterns of the subrule (20), (21) up to (22) in order to assign the priorities (24), and so on successively.

In this way, we achieve a great deal of flexibility and different tables of priorities can, for example, be applied for different types of traffic. So, for example, it can be established that the first rule searches within the header of level 3 for the type of protocol it encapsulates, in such a way that the TCP traffic, which is the level 4 traffic generated according to the TCP/IP standard known in the state of the art, is prioritized according to the content of the ToS, type of service, field, which is one of the fields belonging to the header of the IP standard; in other words, the scheme of priorities of the first rule searches in that field of the IP header; while UDP traffic, which is level 4 traffic according to the TCP/IP standard stated above, is prioritized following another field or something in the data, in other words, the second rule searches for the UDP type and the system of priorities of the second rule searches for the priority in another field or in the data.

## Claims

1. **METHOD FOR THE PRIORITY CLASSIFICATION OF FRAMES,** for support of any system of sending with distinction of service classes, where the frame comprises a level 2 packet, including headers and tails, of OSI architecture; **characterized in that** comprises an application of multiple rules, where each rule is associated with multiple subrules of priorities independent among each rule, in order to analyse a content of each frame and assign a priority to the frame as a function of said analysis.

2. **METHOD FOR THE PRIORITY CLASSIFICATION OF FRAMES,** according to claim 1, **characterized in that** the rules, and the subrules of priorities associated with each rule, are applied according to a certain previously established order.

3. **METHOD FOR THE PRIORITY CLASSIFICATION OF FRAMES,** according to claim 2, **characterized in that** the application of each rule comprises searching for a particular known pattern of bits in the frame in a certain position marked by a displacement on that frame.

4. **METHOD FOR THE PRIORITY CLASSIFICATION OF FRAMES,** according to claim 3, **characterized in that** the subrules of priorities attached to a certain rule are applied when the rule evaluated on the frame at that moment is satisfied.

5. **METHOD FOR THE PRIORITY CLASSIFICATION OF FRAMES,** according to with claim 3, **characterized in that** a following rule in the pre-established order is evaluated when the rule evaluated on the frame at that moment is not satisfied.

6. **METHOD FOR THE PRIORITY CLASSIFICATION OF FRAMES,** according to claim 4, **characterized in that** the application of subrules of priorities comprises, for each subrule, comparing a set of bits in a defined position of the frame with a priority pattern.

7. **METHOD FOR THE PRIORITY CLASSIFICATION OF FRAMES,** according to claim 6, **characterized in that** the priority associated with a certain priority pattern is assigned to the frame when the comparison with that pattern is satisfied in one of the subrules of priorities.

8. **METHOD FOR THE PRIORITY CLASSIFICATION OF FRAMES,** according to claim 6, **characterized in that** the frame is assigned a default priority in the event that none of the priority patterns of the subrules of priorities is satisfied.

9. **METHOD FOR THE PRIORITY CLASSIFICATION OF FRAMES,** according to claim 6, **characterized in that** the following rule in the pre-established order is passed on to for checking in an event that none of the priority patterns of the subrules of priorities is satisfied.

10. **METHOD FOR THE PRIORITY CLASSIFICATION OF FRAMES,** according to claim 9, **characterized in that** a default priority is assigned in the event that none of the rules is satisfied.
